# EUROPEAN PATENT APPLICATION

(11) **EP 2 113 757 A1**
(43) Date of publication of application: **04.11.2009**
(21) Application number: 08075331.2
(22) Date of filing: 02.05.2008
(51) Int. Cl.: G01K 17/00, H04L 27/26

(54) **Method for simultaneous read-out of a plurality of sensor output signals using baseband feedback**

(71) Applicant: Systematic Design Holding B.V., 2623 CR Delft (NL); Stichting SRON Netherlands Institute for Space Research, 3584 CA Utrecht (NL)
(72) Inventor: Monna, Gijsbertus L.E., 2548 HL Den Haag (NL); Mossel, Robert, 1052 WT Amsterdam (NL); De Korte, Piet A. J., 3707 EH Zeist (NL); Bakker, Frank, 1135 JB Edam (NL)

(57) **Abstract**

Method for the simultaneous read-out of a plurality of sensor output signals using baseband feedback, enabling to read-out and accurately reconstruct the output signals of an increased number of sensors by providing separate digital baseband processing of Quadrature and In-phase signal components, using integrators as loopfilters and using phase-correction to achieve a stable feedback loop, thereby remedying problems associated with the prior art in this field.

## Description

The present invention concerns a method for the simultaneous read-out of a plurality of sensor output signals using baseband feedback, whereby
- each sensor output signal is used to amplitude-modulate a sinusoidal carrier signal;
- a Frequency-Division Multiplex (FDM)-signal is created from the modulated carriers;
- a feedback signal, consisting of said FDM-signal after it has been processed as described in the following steps, is subtracted from said (original) FDM-signal;
- the resulting FDM-errorsignal (after said subtraction) is then amplified by an amplifier and converted to a digital signal representation by an Analog-to-Digital-Converter (ADC);
- the resulting digital signal is demultiplexed and the modulated carriers are demodulated to baseband and digitally processed in baseband to provide a digital version of the reconstructed sensor output signals;
- after said digital baseband processing each of the digital output signals is again used to modulate a sinusoidal carrier, the carriers are remultiplexed, converted back to an analogue signal representation by a Digital-to-

Analog-Converter (DAC) and fed back through a feedback loop to a summation point located directly at the input of said amplifier, where the feedback signal is subtracted from said original FDM-signal as described above.

The method according to the present invention is now **characterised in that** the signal components that are used to reconstruct a digital version of the respective original sensor output signals, are obtained by filtering for every original sensor output signal, its digital signal representation after demultiplexing and demodulation to baseband, using an integrator as filter.

In many cases where multiple signal sources are located in each other's proximity, for instance in a sensor array, and the signals all need to undergo the same processing steps, for instance amplification, digitisation etc., it often is efficient to employ multiplexing to be able to use the same processing devices, like amplifiers, Analog-to-Digital-Converters (ADC's) etc. for the signal multiplex, instead of replicating the processing chain for every signal source. Another important advantage of multiplexing is that it significantly limits the number of signal wires between the sensors and the signal processing electronics. The kind of multiplexing used and the actual lay-out of the signal processing chain is thereby totally dependent on factors like, for instance, the nature of the original signal, its spectral and noise characteristics, the extent to which the resulting signals need to ressemble the original signals after processing and demultiplexing, signal transfer characteristics, noise characteristics and dynamic range of the signal processing devices etc. One approach to this is to redesign the signal processing chain and tune all the variables for every possible situation and application. A better approach is however to identify re-usable solutions for problems that are frequently encountered in the multiplexing and demultiplexing of a plurality of sensor output signals. This enables optimisation of the signal processing chain and a reduction of the number of variables to be tuned. A basic assumption in relation to the present invention is, that the design of the signal processing chain must enable nearly complete reconstruction of the information contained in the signals before multiplexing. Another assumption in relation to the present invention is, that Frequency-Division-Multiplexing (FDM) is used, whereby every sensor output signal is used to amplitude-modulate a sinusoidal carrier signal, and a Frequency-Division-Multiplex is created from these modulated signals, whereby the carrier frequencies are chosen much higher than the average bandwidth of the original sensor output signals and the bandwidth separation between adjacent carrier frequencies in the multiplex is chosen higher than said average bandwidth. Furthermore a frequently encountered situation in Frequency-Division-Multiplexing sensor output signals is that the sensor output signals are smaller than the amplitude of the carrier signals. So it is assumed here that the multiplex signal is amplified as close as possible to the location where the original sensor output signals were modulated and multiplexed to prevent the original sensor output signals from being obscured by, for instance, noise. In designing said signal processing chain, one should also carefully consider the fact that signal processing functionalities like amplification and signal addition can in practice be distributed over several devices. For instance, if said plurality of sensor output signals originate from an array of superconducting Transition Edge Sensor (TES) microcalorimeters, the next device in the chain will in many cases be a SQUID (Superconducting Quantum Interference Device), which is able to combine the functionalities of a signal adder, and the first amplification stage of a Low-Noise-Amplifier (LNA). Due to frequently occurring non-linearities in amplifiers, undesired higher-order harmonics are introduced in the output signal during amplification of the multiplex signal. It can be shown that the higher-order harmonics are proportional to Aⁿ where A is the amplifier gain and n the order of the harmonic. So there is an obvious need to limit the amplitude at the amplifier input, for instance by using carrier suppression. Suppression of the carrier signals can be achieved through the use of feedback, whereby a representation of the original multiplex signal, obtained after processing, is fed back to the input of the said amplifier and is subtracted from the original multiplex signal. As mentioned before, the sensors from which the signals originate before modulation and multiplexing and the said amplifier will often be in close proximity of eachother, but in practice there will often be a physical distance between the end of the signal processing chain, where the feedback loop starts, and the summation point at the input of the said amplfier, where the feedback loop ends. This physical distance causes a delay in the signal path. Combined with the delays caused by the devices in the signal path and the signal processing, this may cause instability of the feedback loop. This limits the bandwidth of the feedback loop and therefore the number of sensor output signals that can be included in the original multiplex-signal. To avoid this limitation, the signal after amplification may be demultiplexed, demodulated to baseband and low-pass filtered to reconstruct the original sensor output signals. After this the signals are remodulated and remultiplexed to go into the feedback loop. The use of low-pass filtering with a non-zero cut-off frequency is not optimal in this situation because it reduces the signal and carrier-suppression for signals below the cut-off frequency.

All of the abovementioned problems and solutions are described in prior art documents. For instance in the US Patent Application Publication US 2002/0115572 a method is presented for the read-out of an array of sensors of the TES (Transition Edge Sensor) type which are to be kept under cryogenic conditions during operation. At VTT Technical Research Centre of Finland, Mikko Kiviranta has conducted research in this field involving read-out of a TES-array using SQUID's and baseband feedback. This research has led to the observation that the signal processing after the said amplifier should be done digitally, so an Analog-to-Digital Converter (ADC) as well as a Digital-to-Analog Converter (DAC) were introduced in the feedback loop. Kiviranta splits the digital representation of the carrier-suppressed and amplified version of the original multiplex signals in an In-phase (I) and a Quadrature (Q) component, but adds the two components together in a low-pass filter. This makes phase-reconstruction of the original sensor output signals impossible and causes the signal information of the original sensor output signals, which was contained in the amplitudes and phases of the (I) and (Q) signal components to disappear, resulting in the impossibility to reconstruct the phase of the original sensor output signals and the carrier phase.

It is the object of the present invention to propose a method for the simultaneous read-out of a plurality of sensor output signals using baseband feedback, thereby using prior art solutions for common problems and, at the same time, remedying disadvantages associated with the

### prior art.

To this effect a method is proposed for the simultaneous read-out of a plurality of sensor output signals using baseband feedback, whereby
- each sensor output signal is used to amplitude-modulate a sinusoidal carrier signal;
- a Frequency-Division Multiplex (FDM)-signal is created from the modulated carriers;
- a feedback signal, consisting of said FDM-signal after it has been processed as described in the following steps, is subtracted from said (original) FDM-signal;
- the resulting FDM-errorsignal (after said subtraction) is then amplified by an amplifier and converted to a digital signal representation by an Analog-to-Digital-Converter (ADC);
- the resulting digital signal is demultiplexed and the modulated carriers are demodulated to baseband and digitally processed in baseband to provide a digital version of the reconstructed sensor output signals;
- after said digital baseband processing each of the digital output signals is again used to modulate a sinusoidal carrier, the carriers are remultiplexed, converted back to an analogue signal representation by a Digital-to-
   Analog-Converter (DAC) and fed back through a feedback loop to a summation point located directly at the input of said amplifier, where the feedback signal is subtracted from said original FDM-signal as described above.

The method according to the present invention is now advantageously **characterised in that** the signal components that are used to reconstruct a digital version of the respective original sensor output signals, are obtained by filtering, for every original sensor output signal, its digital signal representation after demultiplexing and demodulation to baseband, using an integrator as filter.
This integrator provides maximum signal and carrier suppresssion at the input of the amplifier when the feedback loop is operational, while preserving the dynamic range, as opposed to the commonly used low-pass filter which does reduce the overall dynamic range.

According to another advantageous characteristic of the method for the simultaneous read-out of a plurality of sensor output signals using baseband feedback according to the present invention, loop delays in the feedback loop are pre-compensated by applying a phase correction when the digital signals at the output of said integrators are remodulated.

The phase-correction is calculated by analysing the delays of all the components in the feedback loop and adding said delays together, from which the phase-correction can be calculated. The phase-correction is then applied during remodulation on the modulating carrier. Failure to adequately compensate for the delays may cause instability in the feedback loop.

According to a further advantageous characteristic of the method for the simultaneous read-out of a plurality of sensor output signals using baseband feedback, demultiplexing and demodulation of the signal directly after said Analog to Digital Converter (ADC) yields In-phase and Quadrature signals for every demodulated sensor output signal, whereby said In-phase and Quadrature signals are subjected separately to filtering by an integrator, are phase-corrected and remodulated separately, and are subsequently combined by addition.
The separate processing of the (I) and the (Q) signal components preserves the amplitude and phase information and enables reconstruction of a digital representation of the corresponding original sensor output signal.

According to yet another advantageous characteristic of the method for the simultaneous read-out of a plurality of sensor output signals using baseband feedback, said plurality of sensor output signals is originating from a sensor array, consisting of a plurality of sensors of identical type. The method according to the invention is particularly suited for sensor arrays wherein the sensors are of the TES (Transition Edge Sensor) type.

According to another advantageous characteristic of the method for the simultaneous read-out of a plurality of sensor output signals using baseband feedback, said plurality of sensor output signals are already combined in the output signal of a single sensor device, instead of originating from a plurality of separate sensors. The method according to the present invention is particularly suited for read-out and processing of the combined signal of for instance a RF antenna.
Normally the Low-Noise-Amplifier (LNA) in a wireless (communications) system has to be very linear to handle the large dynamic range of the antenna. With the method according to the present invention it may be possible to demodulate the few signals, that are determining the high side of the dynamic range, to baseband and optimally suppress the corresponding carriers and signals. Using the method according to the present invention will ease the design of the LNA significantly.

In the following a specific practical implementation of the method for the simultaneous read-out of a plurality of sensor output signals using baseband feedback according to the present invention will be described with reference to the accompanying drawing. The following description will clarify the specific features and advantages of the proposed method and show to the reader in more detail how the invention remedies the aforementioned disadvantages associated with the prior art. However, the reader should observe that the description is merely meant to illustrate application of the invention and should in no way be regarded as limiting the scope of the present invention.

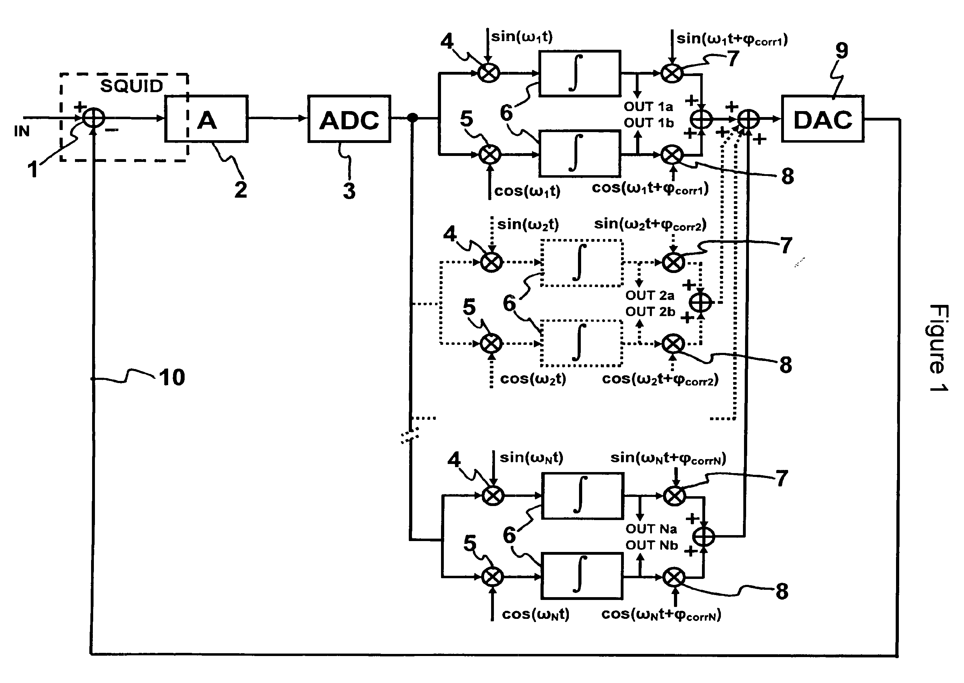

Figure 1 is a schematical representation of a practical implementation of the method according to the present invention.

In the practical implementation shown in figure 1, of the method for simultaneous read-out of a plurality of sensor output signals according to the present invention, said sensor output signals are generated by microcalorimeters that are arranged in an X-ray detector array, designed for future astronomical research in space missions. Said X-ray detector array needs, for instance, to detect single X-rays within a range of approximatley 100 to 10.000 eV with a resolution of 2 eV and a count rate of approximately 250 c/s for each sensor in the array. The said micro-calorimeters consist of superconducting-to- normal phase transition thermometers, commonly referred to as Transition Edge Sensors (TES). To function properly a TES needs to be operated under cryogenic conditions at temperatures of about 0.1 to 4 K. In most cases the TES output signals are amplified by so-called SQUID's (Superconducting Quantum Interference Device), which are in fact current amplifiers with low input impedance and low noise temperature, which makes them a good alternative for amplification of the TES output signals under said cryogenic conditions.
For a high resolution of the X-ray detector array, the number of TES sensors in the array needs to be as large as possible under the limitations imposed by the working environment and the read-out electronics. To maintain, for instance, the necessary low temperature at the location where the TES sensors are situated, it is important that only a small number of electrical leads etc. need to penetrate the barrier between the 'cold space' with the sensor array and the 'warm space' where the other electronics and equipment are located. This can be done by using, for instance, Frequency Division Multiplexing (FDM). In this case the output signal of every TES modulates a sinusoidal carrier signal with a different frequency. The modulated carrier signals are then added to provide a multiplex signal. In the described practical implementation of the method according to the invention there are N TES output signals and, consequently, N modulated carriers in the multiplex signal. The use of FDM limits the required number of electrical connections between said cold space and said warm space considerably and thus enables the use of an increased number of TES sensors, resulting in a higher resolution of the X-ray detector.
The said multiplex signal forms the input signal of the implementation of the method for the simultaneous read-out of a plurality of sensor output signals according to the present invention, shown in Figure 1. In practice the SQUID is located in said cold space and performs the functions of a signal adder (1) and part of the signal amplification (2). The rest of the required amplification (2) may for instance be performed by a Low-Noise-Amplifier (LNA). The SQUID has sufficient bandwidth to enable amplification of a multiplex signal containing a considerable number of modulated carriers with sufficient carrier separation. Although there are positive developments in this field, the non-linearity in the signal transfer of the SQUID would normally be a limiting factor, for instance because this introduces higher order harmonics whose amplitudes increase exponentially with the order of the harmonic. To reduce these unwanted effects, it is important to keep the overall amplitude of the SQUID input signal as small as possible. In the implementation of the method according to the present invention, this is realised by the use of a feedback loop (10) and subtraction of the feedback signal from the sensor output multiplex signal at the SQUID input. Feedback also reduces the undesired effects of other non-linearities in the signal processing chain. After amplification (2) and subtraction of the feedback signal, the resulting FDM-errorsignal is digitised by an Analog-to-Digital-Converter (ADC) (3). This conversion from analog to digital is necessary because the power consumption of some of the devices that are used in the rest of the signal processing chain, for instance multipliers, is considerably lower when digital versions of the devices are used.
After said ADC (3) the digital representation of the carrier-suppressed and amplified multiplex signal is now used as input for N parallel signal processing chains, each consisting of two parallel branches. In each of the N upper branches of said N signal processing chains as shown in Figure 1, a multiplier (4) multiplies the digital representation of the said resulting FDM-errorsignal by a sine signal sin(ωₙt), and in each of the N lower branches a multiplier (5) multiplies the digital representation of the said resulting FDM-errorsignal by a cosine signal cos(ωₙt) with n∈{1,2,...,N} where N is the total number of carriers in the original multiplex signal, and ωₙ=2πf_{cn} where f_{cn} is the n-th carrier frequency in the original multiplex signal. By said multiplications by a sine and a cosine signal the said digital representation of the said resulting multiplex signal is in fact demultiplexed and demodulated to digital baseband signal representations for every original sensor output signal, split into respectively a Quadrature (Q) signal representation and an In-phase (I) signal representation. Many prior art attempts to accurately reconstruct the original sensor output signals have failed because at some point in the processing chain the Quadrature and In-phase signal components are re-added and the resulting signal is low-pass filtered. This causes however the loss of the phase-information that was preserved as long as the Q- and I-signals remained separated. Furthermore, when the signal phase is not known, the feedback signal can not be adequately corrected to be synchronous to the original FDM-signal from which it is subtracted, possibly resulting in an instable feedback loop. In this practical implementation shown in figure 1, of the method for simultaneous read-out of a plurality of sensor output signals according to the present invention, it is particularly advantageous to keep the I- and Q-signals separated during digital processing and to use integrators (6) to filter said signals. The integrators (6) provide maximum signal and carrier suppression at the input of the amplifier when the feedback loop is operational, by enabling a high loop gain, while preserving the dynamic range, as opposed to the use of low-pass filters with a non-zero cut-off frequency, which does reduce the overall dynamic range.

The separate processing of the I- and the Q- signal components for every original sensor output signal preserves the amplitude and phase information and enables reconstruction, using commonly known methods, of said signals from the output signals OUTna en OUTnb with n∈{1,2,...,N} where N is the total number of carriers in the original multiplex signal. Because the phase information remains preserved, it is possible to correct the phase of the feedback signal to prevent an instable feedback loop and to increase the bandwidth of the feedback loop. To achieve this the total loopdelay and the resulting phase correction (ϕ_{corr}) can be determined by a combination of analysis, measurement and simulation.

The multipliers (7) and (8) subsequently multiply each of the N Quadrature and In-phase signal components by respectively sin(ωₙt+ϕ_{corrn}) and cos(ωₙt+ϕ_{corrn}) with n∈{1,2,...,N} where N is the total number of carriers in the original multiplex signal, and ωₙ=2πf_{cn} where f_{cn} is the n-th carrier frequency in the original multiplex signal. All of the N corresponding I- and Q-signal components, that have now been re-modulated, are recombined by addition and the resulting signals are all added together at the input of Digital-to-Analog-Converter (DAC) (9). The output signal of DAC (9) is the analog, phase-corrected feedback signal that is transported by means of feedback loop (10) to signal adder (1), where the feedback signal is subtracted from the original FDM-signal.

This way the method for the simultaneous read-out of a plurality of sensor output signals using baseband feedback according to the present invention enables to read-out and accurately reconstruct the output signals of an increased number of TES-sensors by providing separate digital processing of Quadrature and In-phase signal components, using integrators as loopfilters and using phase-correction to achieve a stable feedback loop, thereby remedying problems associated with the prior art in this field.

All of the devices used in this specific implementation of the method according to the present invention, are commonly available or can be manufactured using commonly known manufacturing techniques.

## Claims

1. Method for the simultaneous read-out of a plurality of sensor output signals, whereby
- each sensor output signal is used to amplitude-modulate a sinusoidal carrier signal;
- a Frequency-Division Multiplex (FDM)-signal is created from the modulated carriers;
- a feedback signal, consisting of said FDM-signal after it has been processed as described in the following steps, is subtracted from said (original) FDM-signal;
- the resulting FDM-errorsignal (after said subtraction) is then amplified by an amplifier and converted to a digital signal representation by an Analog to Digital Converter (ADC);
- the resulting digital signal is de-multiplexed and the modulated carriers are demodulated to baseband and digitally processed in baseband to provide a digital version of the reconstructed sensor output signals;
- after said digital baseband processing each of the digital output signals is again used to modulate a sinusoidal carrier, the carriers are remultiplexed, converted back to an analogue signal representation by a Digital-to-Analog Converter (DAC) and fed back through a feedback loop to a summation point located directly at the input of said amplifier, where the feedback signal is subtracted from said original FDM-signal as described above,
**characterised in that** the signal components that are used to reconstruct a digital version of the respective original sensor output signals, are obtained for every original sensor output signal by filtering its digital signal representation after demultiplexing and demodulation to baseband, using an integrator as filter.

2. Method for the simultaneous read-out of a plurality of sensor output signals according to claim 1, **characterised in that** loop delays in the baseband feedback loop are pre-compensated by applying a phase correction when the digital signals at the output of said integrators are remodulated.

3. Method for the simultaneous read-out of a plurality of sensor output signals according to one of the preceding claims, **characterised in that** demultiplexing and demodulation of the signal directly after said Analog to Digital Converter (ADC) yields In-phase and Quadrature signals for every demodulated sensor output signal, whereby said In-phase and Quadrature signals are separately subjected to filtering by an integrator, are separately phase-corrected and remodulated and subsequently combined by addition.

4. Method for the simultaneous read-out of a plurality of sensor output signals according to one of the preceding claims, **characterised in that** said plurality of sensor output signals are originating from a sensor array consisting of a plurality of sensors of identical type.

5. Method for the simultaneous read-out of a plurality of sensor output signals according to claim 4, **characterised in that** said sensor array consists of sensors of the Transition Edge Sensor (TES) type.

6. Method for the simultaneous read-out of a plurality of sensor output signals according to one of the claims 1 to 3, **characterised in that** said plurality of sensor output signals are already combined in the output signal of a single sensor device instead of originating from a plurality of separate sensors.

7. Method for the simultaneous read-out of a plurality of sensor output signals according to claim 6, **characterised in that** said single sensor device is a RF antenna.
